# EUROPÄISCHE PATENTANMELDUNG

(11) **EP 4 144 587 A1**
(43) Veröffentlichungstag der Anmeldung: **08.03.2023**
(21) Anmeldenummer: 22192639.7
(22) Anmeldetag: 29.08.2022
(51) Int. Cl.: B60R 9/048, B60R 9/10

(54) **ADAPTER ZUM FESTKLEMMEN EINES FAHRRADRAHMENS**

(30) Priorität: 06.09.2021 AT 1502021
(71) Anmelder: SIMPLON Fahrrad GmbH, 6971 Hard (AT)
(72) Erfinder: Sebal, Rainer, 6850 Dornbirn (AT); Heckmeier, Andreas, 87484 Nesselwang (DE)
(74) Vertreter: Torggler & Hofmann Patentanwälte - Rankweil

(57) **Zusammenfassung**

Adapter (1) zum Festklemmen eines Fahrradrahmens (2) in einer Klemme (3) eines Fahrradträgers (4), wobei der Adapter (1) eine Außenschale (5) und in der Außenschale (5) eine Durchgangsöffnung (6) zur Aufnahme eines Rahmenrohres (7) des Fahrradrahmens (2) aufweist, wobei der Adapter (1) zusätzlich eine, die Durchgangsöffnung (6) zumindest bereichsweise umgebende, elastische Polsterung (8) aufweist, welche in der Außenschale (5) angeordnet, vorzugsweise fixiert, ist und aus einem weicheren Material ausgebildet ist als die Außenschale

## Beschreibung

Zur Mitnahme von Fahrrädern mit Fahrzeugen wie z.B. PKWs, Bussen u. dgl. ist es bekannt, die Fahrräder auf einem am Fahrzeugdach oder am Fahrzeugheck montierten Fahrradträger zu transportieren. Dabei gibt es eine Vielzahl von solchen Fahrradträgern, bei denen der Fahrradrahmen und damit das ganze Fahrrad für den Transport mittels einer Klemme am Fahrradträger festgeklemmt wird. Die Klemme wird in der Regel von Hand betätigt, sodass die Klemmkraft stark davon abhängt, wie fest die Klemme von Hand festgezogen wird. Bei Fahrradrahmen aus Stahl und Aluminium ist dies in der Regel kein Problem. Problematisch kann dies aber werden, wenn Fahrräder mit Fahrradrahmen aus einem druckempfindlicheren Material wie z. B. Karbon in solchen Klemmen festgeklemmt werden sollen. Hier kann es zu unerwünschten Delaminationen sowie Rissbildungen und dadurch zu einem Defekt am Fahrradrahmen kommen.

Aufgabe der Erfindung ist es, eine Möglichkeit zur Verfügung zu stellen, sodass auch druckempfindlichere Fahrradrahmen, insbesondere aus Karbon, in einer Klemme eines Fahrradträgers festgeklemmt werden können, ohne dass es durch unsachgemäßes Festziehen der Klemme zu unerwünschten Delaminationen sowie Rissbildungen bzw. Defekten am Fahrradrahmen kommen kann.

Zur Lösung dieser Aufgabe, schlägt die Erfindung einen Adapter zum Festklemmen eines Fahrradrahmens in einer Klemme eines Fahrradträgers, wobei der Adapter eine Außenschale und in der Außenschale eine Durchgangsöffnung zur Aufnahme eines Rahmenrohres des Fahrradrahmens aufweist, wobei der Adapter zusätzlich eine, die Durchgangsöffnung zumindest bereichsweise umgebende, elastische Polsterung aufweist, welche in der Außenschale angeordnet, vorzugsweise fixiert, ist und aus einem weicheren Material ausgebildet ist als die Außenschale.

Durch die Verwendung des erfindungsgemäßen Adapters wird sicher verhindert, dass der Fahrradrahmen durch unsachgemäßes, zu festes Zuziehen der Klemme Schaden nehmen kann. Der Fahrradrahmen bzw. dessen Rahmenrohr liegt im mittels Adapter und Klemme festgeklemmten Zustand in der Durchgangsöffnung auf der elastischen Polsterung des Adapters auf. Die Außenschale verhindert, dass gegebenenfalls zu große Klemmkräfte der Klemme auf das in der Durchgangsöffnung festgeklemmte Rahmenrohr des Fahrradrahmens einwirken können. Die Außenschale des Adapters ist somit eine Schale, die übermäßig große Klemmkräfte in sich aufnimmt und verhindert, dass diese auf das Rahmenrohr in der Durchgangsöffnung übertragen werden. Hierdurch werden zu hohe Flächenpressungen am Rahmenrohr bzw. Fahrradrahmen verhindert. Bei der Nutzung erfindungsgemäßer Adapter ist somit vorgesehen, dass die Klemme nicht direkt am Fahrradrahmen sondern an der Außenschale des Adapters angreift. Die Form der Durchgangsöffnung des erfindungsgemäßen Adapters ist in bevorzugten Ausgestaltungsformen an die Form des zu klemmenden Rahmenrohres des Fahrradrahmens angepasst. Hat das Rahmenrohr einen kreisförmigen Querschnitt, so hat auch die Durchgansöffnung für ein solches Fahrrad günstigerweise eine entsprechende kreisförmige Öffnung. Hat das Rahmenrohr des festzuklemmenden Fahrradrahmens eine von der Kreisform abweichende Querschnittsform, so ist günstigerweise auch die Durchgangsöffnung in Ihrer Form daran angepasst.

Der Begriff des Fahrrades bzw. Fahrradrahmens ist im Sinne der Erfindung weit aufzufassen. Es kann sich um rein mittels Muskelkraft betriebene Fahrräder bzw. deren Fahrradrahmen handeln. Es kann sich aber auch um Fahrräder mit, insbesondere elektrischem, Hilfsmotor, also um sogenannte E-Bikes und deren Fahrradrahmen handeln. Das Rahmenrohr ist ein Rohr des Fahrradrahmens, insbesondere das Oberrohr, das Sattelrohr oder das Vorderrohr.

Die elastische Polsterung des Adapters besteht günstigerweise aus einem Elastomer. Besonders bevorzugt ist vorgesehen, dass die elastische Polsterung Schaumstoff, insbesondere aus Polyurethan, aufweist oder daraus vollständig besteht. Alternativ kann die elastische Polsterung z.B. auch Luftpolster oder metallische Federelemente aufweisen oder daraus bestehen. Bei der Auswahl der elastischen Polsterung sollte darauf geachtet werden, dass die elastische Polsterung einerseits hart genug ist, dass der Fahrradrahmen während des Transports im Fahrradträger nicht wackelt bzw. verrutscht und auch bei einer Vollbremsung noch elastisch abgebremst wird. Andererseits ist darauf zu achten, dass die elastische Polsterung eben nicht zu hart ist, damit der Fahrradrahmen beim Festklemmen im Adapter eben nicht beschädigt werden kann. Bevorzugte Varianten sehen zur Erfüllung dieser Erfordernisse vor, dass die elastische Polsterung für eine Flächenpressung im Bereich von 0,06 N/mm² bis 0,35 N/mm² ausgelegt ist. Die Flächenpressung kann dabei nach EN ISO 844 bei Raumtemperatur bestimmt werden.

Bei der Außenschale ist günstigerweise vorgesehen, dass sie zumindest eine Betriebsstellung aufweist, in der sie das Rahmenrohr des Fahrradrahmens umfangsgeschlossen umgibt. Hierdurch wird besonders gut sichergestellt, dass keine zu hohen Flächenpressungen auf die Polsterung und den in der Polsterung gehaltenen Fahrradrahmen übertragen werden können. Die Außenschale wird günstigerweise aus einem entsprechend harten Kunststoff ausgebildet. Alternativ sind auch Ausgestaltungsformen aus Metall, wie z. B. Aluminium, und/oder aus Holz und/oder aus verschiedenen anderen Verbundwerkstoffen denkbar. Besonders bevorzugt wird die Außenschale aber z. B. aus ABS (Acrylnitril-Butadien-Styrol), und/oder aus ASA (Acrylnitril-Styrol-Acrylat) und/oder aus POM (Polyoxymethylen) und/oder aus PA (Polyamid) und/oder aus PC (Polycarbonat) ausgebildet. Die Kunststoffe können optional auch faserverstärkt sein. Die Außenschale sollte günstigerweise für eine Klemmkraft von zumindest 300 N ausgelegt sein. Dies bedeutet, dass sie in der Betriebsstellung von einer Klemme mit zumindest 300 N beaufschlagt werden kann, ohne dass die Außenschale dabei eine für den Betrieb wesentliche Verformung von mehr als einem Millimeter erfährt.

Um den Adapter in einfacher Art und Weise am Rahmenrohr des Fahrradrahmens befestigen bzw. das Rahmenrohr in einfacher Art und Weise in die Durchgangsöffnung des Adapters einführen zu können, ist günstigerweise vorgesehen, dass die Außenschale aus zwei oder mehr Teilschalen aufgebaut ist, welche voneinander trennbar und zur Außenschale zusammensetzbar sind. Dies ermöglicht es, vor der Montage des Adapters am Fahrradrahmen bzw. an dessen Rahmenrohr die Teilschalen voneinander zu trennen und dann zur Montage so wieder zusammenzufügen, dass dabei das Rahmenrohr in der Durchgangsöffnung des Adapters angeordnet wird.

Günstigerweise ist ein Teil der elastischen Polsterung in jeder dieser Teilschalen angeordnet, vorzugsweise fixiert. Bei diesen Varianten, bei denen die Außenschale aus Teilschalen aufgebaut ist, ist günstigerweise vorgesehen, dass der Adapter eine Befestigungsvorrichtung zum aneinander Befestigen der zusammengesetzten Teilschalen aufweist. Dies erlaubt es, die um das Rahmenrohr des Fahrradrahmens bereits herumgelegten Teilschalen mittels der Befestigungsvorrichtung aneinander zu fixieren, bevor der Adapter in der Klemme des Fahrradträgers eingeklemmt wird. Dies erlaubt somit eine Art Vormontage des Adapters am Fahrradrahmen und vereinfacht das Festklemmen des Fahrradrahmens in der Klemme unter Zwischenschaltung des Adapters. Bei der Befestigungsvorrichtung kann es sich z. B. um ein elastisches Spannband, wie z. B. ein Gummiband, o. dgl. handeln. Als Befestigungsvorrichtung können z.B. aber auch an sich bekannte Spanngurte oder andere an sich bekannte Klemm- oder Steckmechanismen verwendet werden.

Damit die Teilschalen beim Anordnen des Adapters am Rahmenrohr nicht gegeneinander verrutschen, ist günstigerweise vorgesehen, dass die Teilschalen Vorsprünge und/oder Ausnehmungen zum formschlüssigen Zusammensetzen der Teilschalen aufweisen. Alternativ oder zusätzlich kann auch vorgesehen sein, dass zumindest zwei der Teilschalen mittels eines Scharniers schwenkbar miteinander verbunden sind.

Insbesondere bei modernen Fahrrädern und dort wiederum insbesondere bei den sogenannten E-Bikes, also Fahrrädern mit elektrischem Hilfsmotor, weisen die mittels Klemme und Adapter festzuklemmenden Rahmenrohre oft einen sehr großen Durchmesser auf, was handelsübliche Fahrradträger mit ihren üblicherweise realisierten Klemmen oft an die Grenze des Machbaren bringt. Insbesondere für solche Fahrradrahmen sehen bevorzugte Varianten der Erfindung vor, dass am Adapter seitlich ein Klemmbereich zum Festklemmen in der Klemme des Fahrradträgers angeformt ist, wobei vorzugsweise vorgesehen ist, dass ein Durchmesser des Klemmbereichs kleiner ist als ein Durchmesser der Durchgangsöffnung. Der Durchmesser des Klemmbereichs kann dann an die normale Öffnungsweise handelsüblicher Klemmen von handelsüblichen Fahrradträgern angepasst sein, während der restliche Adapter und insbesondere dessen Durchgangsöffnung auch an sehr große Durchmesser von zu klemmenden Rahmenrohren angepasst sein kann.

Weitere Merkmale und Einzelheiten bevorzugter Ausgestaltungsformen der Erfindung werden beispielhaft in der nachfolgenden Figurenbeschreibung erläutert. Es zeigen:
- Fig. 1: einen Fahrradträger und einen an der Klemme des Fahrradträgers unter Verwendung eines ersten Ausführungsbeispiels eines erfindungsgemäßen Adapters festgeklemmten Fahrradrahmen;
- Fig. 2: eine Darstellung des Rahmenrohres des Fahrradrahmens mit dem Adapter aus Fig. 1, wobei die Teilschalen der Außenschale voneinander getrennt sind;
- Fig. 3: eine ähnliche Darstellung zu Fig. 2, allerdings ohne Rahmenrohr;
- Fig. 4: eine Darstellung des ersten Ausführungsbeispiels des erfindungsgemäßen Adapters zur Erläuterung der Befestigungsvorrichtung;
- Fig. 5: ein zweites Ausführungsbeispiel eines erfindungsgemäßen Adapters für Fahrradrahmen mit besonders dicken Rahmenrohren;
- Fig. 6: den Adapter aus Fig. 5 in aufgeklappter Stellung.

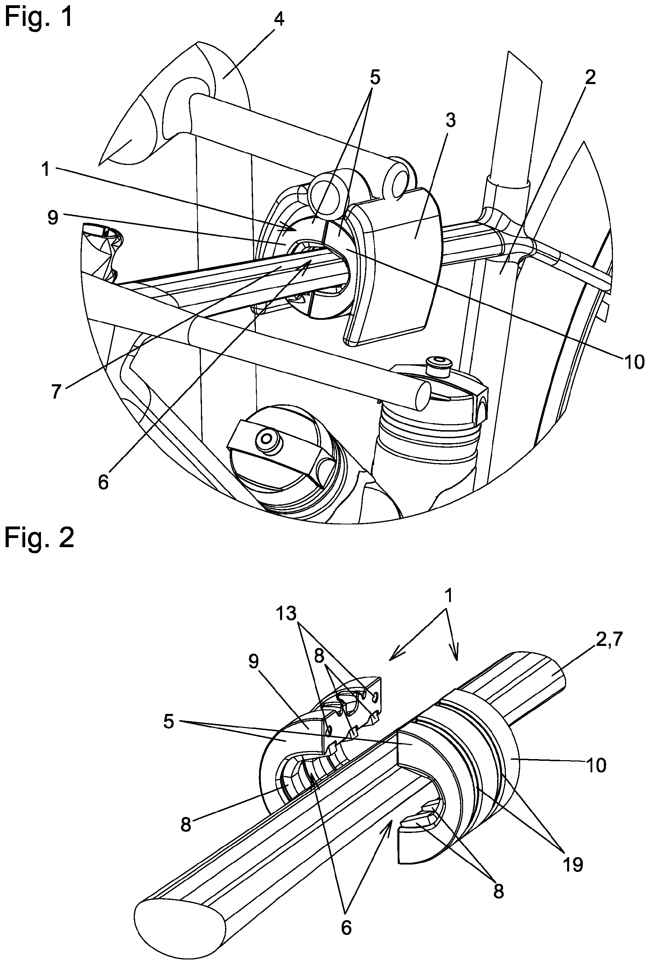

Fig. 1 zeigt die Betriebsstellung, in der der erfindungsgemäße Adapter 1 zum Festklemmen eines Fahrradrahmens 2 in einer Klemme 3 eines Fahrradträgers 4 verwendet wird. Der Adapter 1 dieses Ausführungsbeispiels weist eine Außenschale 5 mit einer Durchgangsöffnung 6 auf. Durch die Durchgangsöffnung 6 ist in der gezeigten Betriebsstellung das Rahmenrohr 7 des Fahrradrahmens 2 hindurchgeführt. Der Adapter 1 weist eine, die Durchgangsöffnung 6 zumindest bereichsweise umgebende elastische Polsterung 8 auf. Diese ist in der Außenschale 5 angeordnet, vorzugsweise fixiert, und erfindungsgemäß aus einem weicheren Material ausgebildet als die Außenschale 5. Wie eingangs bereits erläutert, kann die elastische Polsterung 8 Schaumstoffe aufweisen, oder aus einem anderen geeigneten Elastomer hergestellt sein. Geeignete Materialien zur Ausbildung der elastischen Polsterung 8 und auch der Außenschale 5 sind eingangs genannt.

In Fig. 1 ist bereits zu sehen, dass die Außenschale 5 dieses Ausführungsbeispiels aus zwei Teilschalen 9 und 10 aufgebaut ist. Diese sind voneinander trennbar und, wie in Fig. 1 gezeigt, zur Außenschale 5 zusammensetzbar. In der in Fig. 1 gezeigten Betriebsstellung liegt der Adapter 1 mit seiner elastischen Polsterung 8 am Rahmenrohr 7 an, während die Klemme 3 die Außenschale 5 des Adapters 1 außen umfasst und festklemmt. Somit ist der Fahrradrahmen 2 und damit das Fahrrad unter Zwischenlage des erfindungsgemäßen Adapters 1 am Fahrradträger 4 für den Transport am entsprechenden Fahrzeug befestigt. Die Außenschale 5 ist günstigerweise so steif ausgebildet, dass sie eine Klemmkraft von zumindest 300 N aufnehmen kann, ohne mehr als 1mm verformt zu werden. Es handelt sich somit für die bei der Klemme 3 auftretenden Kräfte um eine starre Außenschale 5, welche verhindert, dass mittels der Klemme 3 zu hohe Flächenpressungen auf das Rahmenrohr 7 bzw. auf den Fahrradrahmen 2 einwirken. Die Polsterung 8 sorgt für eine ausreichend stabile Halterung des Rahmenrohrs 7 bzw. des Fahrradrahmens 2 im Adapter 1, ohne dass die Gefahr besteht, dass es zu zu hohen Flächenpressungen im Rahmenrohr 7 und somit zur Beschädigung des Fahrradrahmens 2 kommen kann. Die elastische Polsterung 8 ist bevorzugt für Flächenpressungen im Bereich von 0,06 N/mm² bis 0,35 N/mm² ausgelegt, wobei die Flächenpressung der elastischen Polsterung 8 nach EN ISO 844 bei Raumtemperatur bestimmt wird.

Fig. 2 zeigt die beiden Teilschalen 9 und 10 der Außenschale 5 in einer voneinander getrennten Stellung. Zu sehen ist hier auch die elastische Polsterung 8, welche bevorzugt in der Außenschale 5 nicht nur angeordnet sondern auch fixiert ist. Im gezeigten Ausführungsbeispiel ist die elastische Polsterung 8 streifenförmig ausgebildet. Wie eingangs bereits erläutert, könnte die elastische Polsterung 8 aber natürlich auch als flächige Matte oder eine Ansammlung von Punkten bzw. voneinander getrennten Flächen o. dgl. in der Außenschale 5 bzw. in deren Teilschalen 9 und 10 angeordnet sein, um so die Durchgangsöffnung 6 zu begrenzen. Bevorzugt ist jedenfalls vorgesehen, dass der Adapter 1 in der Betriebsstellung ausschließlich mittels der elastischen Polsterung 8 am Rahmenrohr 7 anliegt.

Setzt man die beiden Teilschalen 9 und 10 zur Außenschale 5 zusammen, so ist vorzugsweise vorgesehen, dass die Außenschale 5 in der, in Fig. 1 gezeigten Betriebsstellung das Rahmenrohr 7 des Fahrradrahmens 2 umfangsgeschlossen umgibt. Zur Montage des Adapters 1 an der entsprechenden Stelle des Fahrradrahmens 2, also am entsprechenden Rahmenrohr 7, werden zunächst die beiden Teilschalen 9 und 10 so am entsprechenden Rahmenrohr 7 zusammengefügt, dass das Rahmenrohr 7 zwischen den elastischen Polsterungen 8 in der Durchgangsöffnung 6 zu liegen kommt. Anschließend kann der Fahrradrahmen 2 mitsamt dem daran angeordneten Adapter 1 so in den Fahrradträger 4 gestellt werden, dass der Fahrradrahmen 2 unter Zwischenschaltung des Adapters 1 in der Klemme 3 festgeklemmt werden kann, so wie dies in Fig. 1 dargestellt ist. Beim Festklemmen kommen die Klemmbacken der Klemme 3 an der Außenseite der Außenschale 5 zur Anlage.

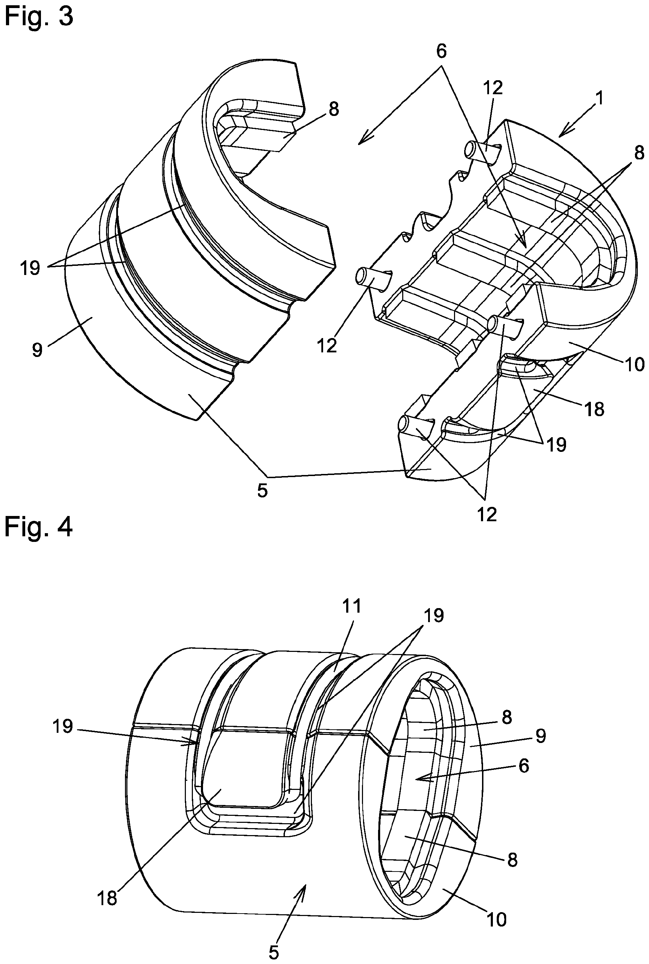

Damit die Teilschalen 9 und 10 der Außenschale 5 nicht gegeneinander verrutschen, weisen die Teilschalen 9 und 10 bevorzugt Vorsprünge 12 und/oder Ausnehmungen 13 auf, welche dafür sorgen, dass die Teilschalen 9 und 10 nach dem Zusammensetzen formschlüssig ineinander eingreifen. In Fig. 2 sind in der einen Teilschale 9 die Ausnehmungen 13 zu sehen. In Fig. 3 sind in der anderen Teilschale 10 die entsprechenden Vorsprünge 12 zu sehen, welche beim Zusammensetzen der Teilschalen 9 und 10 zur Außenschale 5 in die Ausnehmungen 13 eindringen. In diesem ersten Ausführungsbeispiel sind die Ausnehmungen 13 in Form von Löchern und die Vorsprünge 12 in Form von entsprechenden Stiften ausgebildet. Natürlich gibt es hier auch zahlreiche andere Möglichkeiten andere Ausgestaltungsformen von Vorsprüngen 12 und Ausnehmungen 13 zu realisieren. Als Beispiele sind Nut- und Federkonstruktionen u. dgl. zu nennen.

Wenn der Adapter 1 bzw. dessen Außenschale 5 zwei oder mehr Teilschalen 9 und 10 aufweist, sehen bevorzugte Varianten der Erfindung vor, dass der Adapter 1 eine Befestigungsvorrichtung 11 zum aneinander Befestigen der zusammengesetzten Teilschalen 9 und 10 aufweist. Mit dieser Befestigungsvorrichtung 11 kann verhindert werden, dass die Teilschalen 9 und 10 ungewollt auseinanderfallen, wenn der Adapter 1 noch nicht oder nicht mehr in der Klemme 3 festgeklemmt ist. Im ersten Ausführungsbeispiel handelt es sich bei der Befestigungsvorrichtung 11 um ein elastisches Spannband wie z. B. ein Gummiband. Dieses wird auf der Außenseite der Außenschale 5 bzw. der Teilschalen 9 und 10 in dort vorgesehenen Aufnahmenuten 19 geführt und, wie in Fig. 4 zu sehen, über entsprechende Haken 18 in einer der beiden Teilschalen 9 und 10 gespannt. Hierdurch wird erreicht, dass die Teilschalen 9 und 10 auch dann zusammenhalten, wenn der Adapter 1 mit dem Fahrradrahmen 2 noch nicht mit der Klemme 3 festgeklemmt ist.

Anstelle eines elastischen Spannbandes bzw. Gummibandes können natürlich auch andere Spannbänder, Rast- und Klemmverschlüsse, magnetische Verbindungsvorrichtungen o. dgl. als Befestigungsvorrichtung 11 eingesetzt werden, um so die Teilschalen 9 und 10 der Außenschale 5 bereits dann zusammenzuhalten, wenn der Adapter 1 noch nicht in der Klemme 3 festgeklemmt ist.

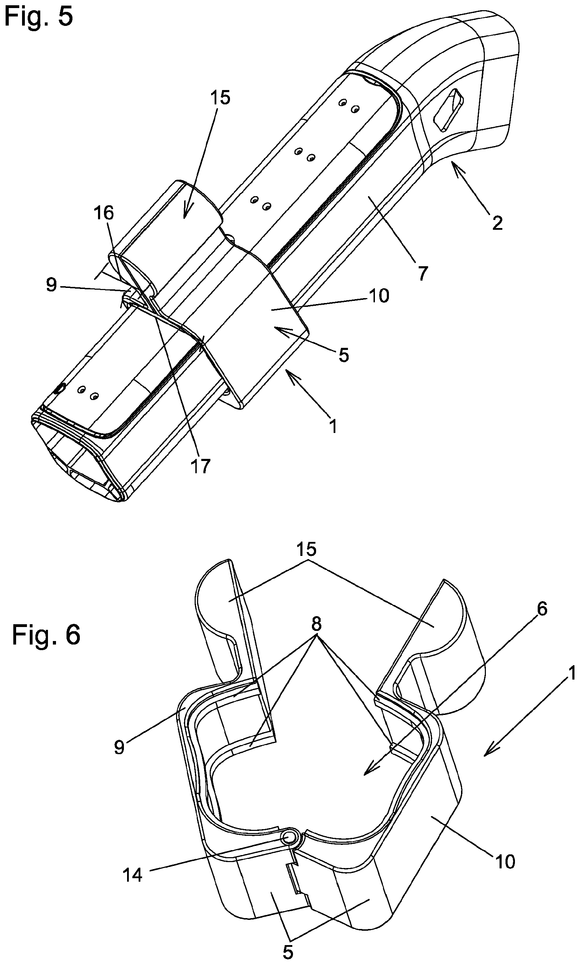

Fig. 5 zeigt ein zweites Ausführungsbeispiel eines erfindungsgemäßen Adapters 1, welches insbesondere dann zum Einsatz kommen kann, wenn der im Fahrradträger 4 zu befestigende Fahrradrahmen 2 besonders dicke Rahmenrohre 7 aufweist. Dies kann z. B. dann der Fall sein, wenn es sich bei dem Fahrrad um ein sogenanntes E-Bike, also ein Fahrrad mit Hilfsmotor handelt und das Rahmenrohr 7 dazu dient, den Akkumulator zu beherbergen. Es sind heutzutage aber auch rein mit Muskelkraft zu betreibende Fahrräder bekannt, welche Rahmenrohre 7 mit entsprechend großem Durchmesser aufweisen. Bei solchen Varianten erfindungsgemäßer Adapter 1 ist, wie in Fig. 5 gut zu sehen, am Adapter 1 seitlich ein Klemmbereich 15 zum Festklemmen in der Klemme 3 des Fahrradträgers 4 angeformt bzw. angeordnet. Vorzugsweise ist dabei vorgesehen, dass der Durchmesser 16 des Klemmbereichs 15 kleiner ist als der Durchmesser 17 der Durchgangsöffnung 6, in welcher eben das Rahmenrohr 7 angeordnet wird, um den Fahrradrahmen 2 mittels des Adapters 1 in der Klemme 3 festzuklemmen. Durch die seitliche Anordnung des Klemmbereichs 15 am Adapter 1 kann dieser mit einem so kleinen Durchmesser 16 ausgeführt werden, dass der Adapter 1 problemlos mit gewöhnlichen, im Handel vertriebenen Klemmen 3 geklemmt werden kann, obwohl das Rahmenrohr 7 des entsprechenden Fahrradrahmens 2 einen so großen Durchmesser 17 aufweist, dass es gar nicht mehr möglich wäre, die Klemme 3 so um das Rahmenrohr 7 zu legen, dass der Fahrradrahmen 2 noch mit der Klemme 3 festgeklemmt werden kann.

Dies zeigt, dass erfindungsgemäße Adapter 1 nicht nur dazu eingesetzt werden können, zu hohe Flächenpressungen am Fahrradrahmen 2 bzw. dessen Rahmenrohr 7 zu verhindern. Erfindungsgemäße Adapter 1 können in entsprechenden Ausgestaltungsformen, wie in den Fig. 5 und 6 gezeigt, auch dazu eingesetzt werden, Fahrradrahmen 2 mit entsprechend dicken Rahmenrohren 7 in der Klemme 3 zu befestigen, obwohl die Klemme 3 selbst gar nicht mehr um das entsprechende Rahmenrohr 7 herumgreifen könnte.

In Fig. 6 ist gut zu sehen, dass auch dieses zweite Ausführungsbeispiel eines erfindungsgemäßen Adapters 1 eine Außenschale 5 aufweist, welche aus zwei Teilschalen 9 und 10 gebildet ist. Fig. 6 veranschaulicht, dass diese Teilschalen 9 und 10 auch mittels eines Scharniers 14 miteinander verbunden sein können. Im aufgeklappten Zustand kann dann das zu umgreifende Rahmenrohr 7 in die Durchgangsöffnung 6 eingeführt werden. Nach dem Zusammenklappen in die in Fig. 5 gezeigte Stellung kann dann der Fahrradrahmen 2 in den Fahrradträger 4 eingesetzt und der Adapter 1 mit seinem Klemmbereich 15 in der Klemme 3 festgeklemmt werden.

Auch in diesem Ausführungsbeispiel ist erfindungsgemäß vorgesehen, dass die Durchgangsöffnung 6 von einer entsprechenden elastischen Polsterung 8 umgeben ist, sodass das in der Durchgangsöffnung 6 angeordnete Rahmenrohr 7 nur mit der elastischen Polsterung 8 aber nicht mit der Außenschale 5 in Kontakt kommt.

### Legende zu den Hinweisziffern:

- 1: Adapter
- 2: Fahrradrahmen
- 3: Klemme
- 4: Fahrradträger
- 5: Außenschale
- 6: Durchgangsöffnung
- 7: Rahmenrohr
- 8: Polsterung
- 9: Teilschale
- 10: Teilschale
- 11: Befestigungsvorrichtung
- 12: Vorsprung
- 13: Ausnehmung
- 14: Scharnier
- 15: Klemmbereich
- 16: Durchmesser
- 17: Durchmesser
- 18: Haken
- 19: Aufnahmenut

## Patentansprüche

1. Adapter (1) zum Festklemmen eines Fahrradrahmens (2) in einer Klemme (3) eines Fahrradträgers (4), wobei der Adapter (1) eine Außenschale (5) und in der Außenschale (5) eine Durchgangsöffnung (6) zur Aufnahme eines Rahmenrohres (7) des Fahrradrahmens (2) aufweist, wobei der Adapter (1) zusätzlich eine, die Durchgangsöffnung (6) zumindest bereichsweise umgebende, elastische Polsterung (8) aufweist, welche in der Außenschale (5) angeordnet, vorzugsweise fixiert, ist und aus einem weicheren Material ausgebildet ist als die Außenschale (5) .

2. Adapter (1) nach Anspruch 1, **dadurch gekennzeichnet, dass** die elastische Polsterung (8) Schaumstoff aufweist.

3. Adapter (1) nach Anspruch 1 oder 2, **dadurch gekennzeichnet, dass** die Außenschale (5) aus zwei oder mehr Teilschalen (9, 10) aufgebaut ist, welche voneinander trennbar und zur Außenschale (5) zusammensetzbar sind.

4. Adapter (1) nach Anspruch 3, **dadurch gekennzeichnet, dass** der Adapter (1) eine Befestigungsvorrichtung (11) zum aneinander Befestigen der zusammengesetzten Teilschalen (9, 10) aufweist.

5. Adapter (1) nach Anspruch 4, **dadurch gekennzeichnet, dass** die Befestigungsvorrichtung (11) ein elastisches Spannband ist.

6. Adapter (1) nach einem der Ansprüche 3 bis 5, **dadurch gekennzeichnet, dass** die Teilschalen (9, 10) Vorsprünge (12) und/oder Ausnehmungen (13) zum formschlüssigen Zusammensetzen der Teilschalen (9, 10) aufweisen, und/oder dass zumindest zwei der Teilschalen (9, 10) mittels eines Scharniers (14) schwenkbar miteinander verbunden sind.

7. Adapter (1) nach einem der Ansprüche 1 bis 6, **dadurch gekennzeichnet, dass** die Außenschale (5) zumindest eine Betriebsstellung aufweist, in der sie das Rahmenrohr (7) des Fahrradrahmens (2) umfangsgeschlossen umgibt.

8. Adapter (1) nach einem der Ansprüche 1 bis 7, **dadurch gekennzeichnet, dass** die Außenschale (5) für eine Klemmkraft von zumindest 300 Newton ausgelegt ist.

9. Adapter (1) nach einem der Ansprüche 1 bis 8, **dadurch gekennzeichnet, dass** die elastische Polsterung (8) für eine Flächenpressung im Bereich von 0,06 N/mm² bis 0,35 N/mm² ausgelegt ist.

10. Adapter (1) nach einem der Ansprüche 1 bis 9, **dadurch gekennzeichnet, dass** am Adapter (1) seitlich ein Klemmbereich (15) zum Festklemmen in der Klemme (3) des Fahrradträgers (4) angeformt ist, wobei vorzugsweise vorgesehen ist, dass ein Durchmesser (16) des Klemmbereichs (15) kleiner ist als ein Durchmesser (17) der Durchgangsöffnung (6).
